# FASCICULE DE BREVET EUROPEEN

(11) **EP 0 469 229 B1**
(45) Date de publication et mention de la délivrance du brevet: **23.06.1993**
(21) Numéro de dépôt: 90870123.8
(22) Date de dépôt: 31.07.1990
(51) Int. Cl.: A01B 69/00, A01D 27/00

(54) **Dispositif de guidage d'une machine agricole et machine equipée dudit dispositif de guidage**
Steuervorrichtung für landwirtschaftiche Maschine und Maschine ausgerüstet mit einer solchen Vorrichtung
Steering device for agricultural machine and machine equipped with such a device

(43) Date de publication de la demande: 05.02.1992
(73) Titulaire: N.V. CONSTRUCTIEWERKHUIZEN R. DEWULF S.A., B-8810 Roeselare (BE)
(72) Inventeur: Decramer, Luk, B-8480 Veurne (BE); Versichele, Luc, B-8790 Waregem (BE)
(74) Mandataire: Vanderperre, Robert

(56) Documents cités:
- FR-A- 904 428
- FR-A- 2 073 945
- FR-A- 2 204 337
- FR-A- 2 470 529

## Description

La présente invention est relative à un dispositif de guidage d'une machine agricole à trois roues.

Les avantages d'une charette agricole tricycle sont connus depuis longtemps des agriculteurs, notamment depuis l'utilisation d'une charette à trois roues tirée par un cheval de trait. L'emploi d'une charette à trois roues permet en effet d'éviter la formation d'ornières. Elle est d'une construction simple et d'une maniabilité extrême. On connaît déjà une dispositif de guidage d'une machine agricole sur trois roues correspondant au préambule de la revendication 1 (FR-A-2073945).

Ce principe de guidage d'un véhicule à trois roues a été délaissé dans les machines agricoles modernes en raison de dimensions de plus en plus importantes de ces machines.

A une machine agricole à trois roues comprenant une roue de guidage unique à l'avant du véhicule, on a préféré pendant longtemps un véhicule à quatre roues comprenant un essieu directionnel à deux roues-avant gauche et droite de guidage et un essieu non directionnel à deux roues à l'arrière.

Un véhicule à quatre roues présente !'inconvénient d'écraser généralement une partie de la récolte. En effet, les roues avant qui précèdent le dispositif d'arrachage, appuient sur le sol avant que celui-ci ne soit débarrassé des fruits, et écrasent une partie de la récolte même si l'opérateur guide minutieusement l'une des roues entre les rangées de fruits. Le poids des machines modernes est en effet tellement considérable, que la largeur des pneus excède la largeur du sillon entre deux rangées consécutives.

En outre, une large bande de sol ne peut être traitée par la machine à chaque extrémité du champ en raison du rayon de braquage important de la machine.

L'objet de la présente invention est un dispositif de guidage destiné à une machine agricole à trois roues qui permette de remédier aux inconvénients susdits. Il concerne un dispositif de guidage à une seule roue de guidage disposée à l'avant de la machine dans le prolongement d'un des côtés longitudinaux de la machine de manière à évoluer à côté et en-dehors de la bande de champ à traiter.

Le dispositif présente un rayon de braquage de loin inférieur à celui d'une machine à quatre roues. Il est très simple et très maniable de manière à pouvoir répondre aux exigences d'une exploitation agricole efficace.

Le dispositif de guidage selon l'invention, pour un véhicule agricole à trois roues est caractérisé dans la revendication 1 et comprend en outre une roue de guidage avant orientable montée sur un timon pivotant autour d'un premier pivot sensiblement vertical, cette roue de guidage avant étant montée pivotante autour d'un second pivot sensiblement vertical, monté lui-même à l'extrémité opposée libre du timon.

Le dispositif de guidage faisant l'objet de l'invention comprend deux organes de guidage combinés de l'avant-train du véhicule, le premier étant un timon et le second une fourche ou fusée commandant l'orientation de la roue de guidage, cette orientation pouvant suivant l'invention, être différente de celle du timon.

D'autres particularités et détails de l'invention, apparaîtront au cours de la description détaillée suivante, dans laquelle il est fait référence aux dessins ci-annexés qui montrent, à titre d'exemple non limitatif, une forme de réalisation d'une machine agricole selon l'invention.

Dans ces figures :
- la figure 1 est une vue en plan schématique d'un châssis d'une machine agricole à trois roues comprenant un dispositif de guidage selon l'invention, et
- les figures 2 et 3 sont des vues en élévation latérale gauche et droite du dispositif de guidage monté dans la figure 1.

Dans ces diverses figures, les mêmes signes de référence désignent des éléments identiques ou analogues.

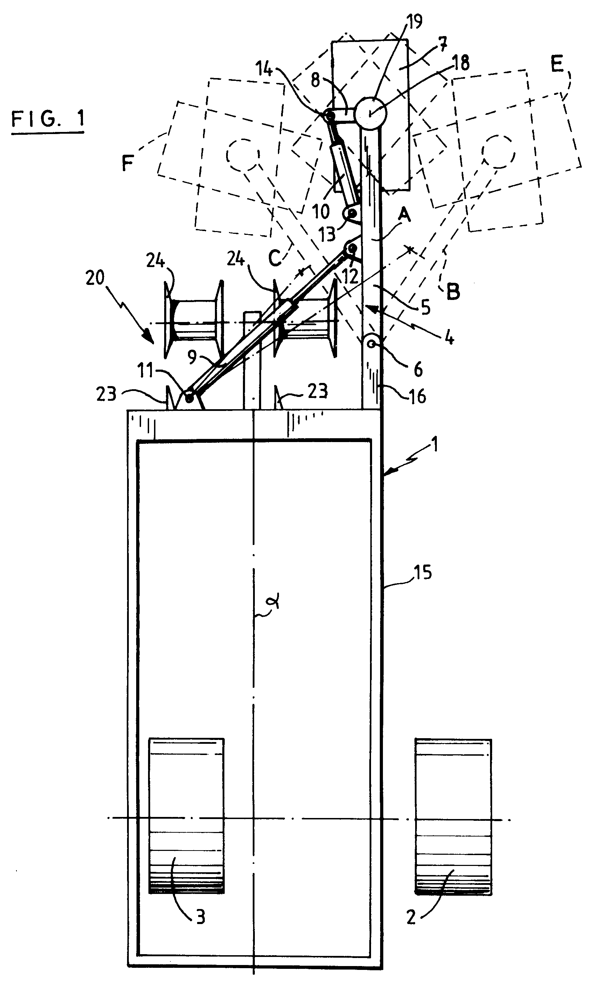

La machine agricole selon l'invention, dont une vue en plan schématique est montrée dans la figure 1, comprend un châssis 1 portant à l'avant un dispositif de guidage 4 et un dispositif d'arrachage 20 formé d'une charrue munie de coutres fixes 23, de disques déflecteurs rotatifs 24 et de chaînes transporteuses non représentées sur les figures. Au milieu du châssis est monté , un dispositif de nettoyage, de triage et d'entreposage des fruits (non montré).

Le châssis comprend une roue de guidage avant 7 unique et deux roues arrière motrices 2 et 3. Ces roues arrière 2 et 3 sont disposées de manière dissymétrique par rapport à l'axe longitudinal de châssis 1. Dans la machine décrite la roue arrière 3 se trouve à l'extérieur du châssis. La roue de guidage avant 7 est portée par un timon orientable 5 articulé autour d'un premier pivot vertical 6 fixé au voisinage d'un coin du châssis rectangulaire de la machine. Le premier pivot vertical 6 est monté sur un prolongement 16 du côté longitudinal 15 du châssis 1.

Un dispositif de nettoyage et de triage (non montré) est porté par le châssis 1 latéralement par rapport à la roue de guidage 7, de manière que l'axe d'inertie longitudinal de la machine se confonde plus ou moins avec le plan α de symétrie du châssis 1 de la machine.

Une disposition latérale de la roue de guidage avant 7 a pour conséquence que celle-ci prend appui exclusivement sur un sol débarrassé de la récolte. Il en est de même des roues arrière puisqu'elles suivent le dispositif d'arrachage.

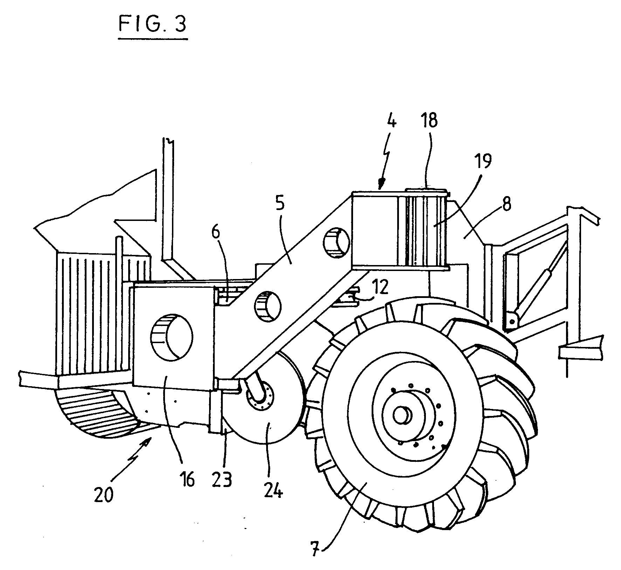

Le timon 5 qui est articulé autour du premier pivot vertical 6 (voir figure 3) monté sur un prolongement 16 du côté droit du châssis 1, au voisinage du coin droit du châssis est pourvu à son extrémité libre d'une fourche ou une fusée 19 de suspension de la roue de guidage avant 7 qui peut ainsi pivoter vers la gauche et vers la droite autour d'un second pivot vertical 18 par rapport au timon 5 qui est lui-même orientable à gauche ou à droite autour du premier pivot vertical 6.

La machine agricole selon l'invention, repose sur le sol à l'aide de seulement trois roues 2, 3 et 7, c'est-à-dire deux roues arrière 2 et 3 non orientables et une roue avant 7 orientable, qui est la roue de guidage.

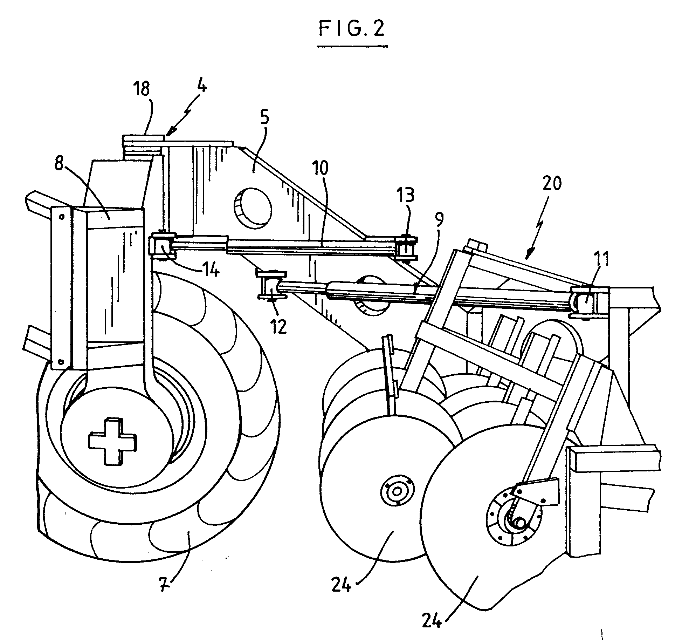

Le timon 5 de la roue avant 7 (figures 1 et 2) est actionné à l'aide d'un second vérin hydraulique 9. Le second vérin 9 est articulé sur le châssis 1 de la machine autour d'un pivot 11 et sur le timon 5 autour d'un pivot 12. L'orientation de la roue de guidage avant 7 est commandée par un premier vérin hydraulique 10. Celui-ci est articulé sur le timon 5 autour d'un quatrième pivot 13 et sur un levier 8 de guidage de la fusée 19 de la roue de guidage avant 7 autour d'un troisième pivot 14. L'axe de pivotement de la roue de guidage avant 7 de guidage est formé par l'axe de la fusée 19.

Le dispositif de guidage selon l'invention peut être actionné à partir d'une cabine de conduite montée sur le châssis.

Dans la position représentée en trait plein dans la figure 1, le timon 5 s'étend dans le prolongement du côté droit 15 du châssis 1 de la machine, le plan moyen de la roue de guidage avant 7 coîncidant avec le plan longitudinal du timon 5 et celui du côté droit 15 du châssis 1.

L'orientation de la roue de guidage avant 7 par rapport au timon est commandée à l'aide du premier vérin 10 et celle du timon 5 par rapport au châssis est commandée à l'aide du second vérin 9.

L'orientation variable du timon 5 permet de changer à volonté la position de la roue de guidage avant 7 par rapport au châssis 1 et par rapport aux deux roues arrière 2 et 3.

Le déplacement latéral de la roue de guidage 7 par rapport au châssis 1 entre l'axe longitudinal d'inertie de la machine et le côté longitudinal 15 du châssis 1 procure un avantage important à la machine. En effet, ce déplacement latéral de la roue de guidage 7 modifie la forme du triangle d'équilibre déterminé par les centres des trois roues 2, 3 et 7 assimilées à des circonférences.

Lorsque la machine agricole est mise en service sur un champ, le dispositif d'arrachage 20 est abaissé sur le sol ou dans le sol et contribue à porter la machine. Le timon 5 portant la roue de guidage 7, est amené généralement dans le prolongement du côté droit 15 de la machine de manière que la roue de guidage 7 évolue le long du bord de la partie du champ à traiter, sans écraser une partie de la récolte.

Dans cette position, illustrée en traits pleins et désignée par A dans la figure 1, le centre de gravité de la machine se trouve au voisinage d'un des côtés du triangle d'équilibre déterminé par les trois roues 2, 3 et 7 et donc plus ou moins en équilibre instable si le dispositif d'arrachage devait être soulevé.

La distance entre les rangées de récolte n'a aucune importance parce que la roue de guidage avant 7, en position de service de la machine sur le champ à travailler, n'évolue que sur une bande de sol déjà débarrassée des fruits de la récolte.

Le choix de la position C de la roue de guidage avant 7, illustrée en traits de chaînette dans la figure 1, permet d'augmenter la stabilité dynamique de la machine agricole sur route lorsqu'elle se rend au champ, alors que le dispositif d'arrachage est soulevé. La position C permet en effet d'amener le centre de gravité de la machine au voisinage du point d'intersection des médianes du triangle d'équilibre déterminé par les centres des trois roues 2, 3 et 7.

La position B du timon, illustrée en traits de chaînette dans la figure 1, permet d'obtenir, en service sur le champ, un rayon de braquage très court de la machine agricole vers la droite, lorsque la roue avant 7 est actionnée dans la postion E.

De même, la position C du timon permet d'obtenir un rayon de braquage très court de la machine agricole vers la gauche, lorsque la roue de guidage avant 7 est orientée dans la position F.

Dans une certaine mesure, la commande du second vérin 9 permet de diriger les roues arrière 2 et 3, alors que celles-ci ne disposent pas de système de direction distinct, ce qui permet de mieux maîtriser la conduite de la machine afin de ne pas écraser une partie de la récolte.

## Revendications

1. Dispositif de guidage d'une machine agricole montée sur trois roues (2, 3, 7), dont l'une est une roue de guidage (7) avant orientable portée sur l'extrémité libre d'un timon (5) pivotant à l'extrémité opposée autour d'un premier pivot (6) sensiblement vertical, par une fourche ou une fusée (19) susceptible de pivoter autour d'un second pivot (18) sensiblement vertical, sous l'action d'un levier de guidage (8) actionné par un premier vérin hydraulique (10) articulé à une extrémité sur le levier de guidage (8) autour d'un troisième pivot (14) et articulé à l'autre extrémité sur le timon (5) autour d'un quatrième pivot (13), caractérisé en ce que le timon (5) est actionné par un second vérin (9) articulé d'une part sur le châssis (1) et d'autre part sur le timon (5), permettant d'amener le point d'intersection des médianes du triangle d'équilibre déterminé par les centres des trois roues (2, 3 et 7) sur l'axe longitudinal d'inertie de la machine sur lequel se trouve le centre de gravité.

2. Dispositif selon la revendication 1, caractérisé en ce que le timon (5) est articulé autour du premier pivot (6) à un prolongement (16) de l'un des côtés longitudinaux (15) du châssis (1).

3. Dispositif de guidage selon la revendication 1 ou 2, caractérisé en ce que le timon (5) est orientable à volonté à gauche et à droite.

4. Dispositif de guidage selon l'une quelconque des revendications 1 à 3, caractérisé en ce que l'orientation de la roue de guidage (7) par rapport au timon (5) et l'orientation du timon (5) par rapport au châssis (1) peuvent être commandées à partir d'une cabine de conduite montée sur le châssis (1).

## Patentansprüche

1. Steuervorrichtung für eine landwirtschaftliche Maschine, die auf drei Rädern (2, 3, 7) aufgebaut ist, von denen eines ein vorderes, einschlagbares Führungsrad (7) ist, das an einem freien Ende eines Balkens (5), dessen anderes Ende um ein im wesentlichen vertikales erstes Drehgelenk (6) drehbar ist, gelagert ist und das um ein im wesentlichen vertikales zweites Drehgelenk (18) unter Einwirkung eines von einem ersten Hydraulikzylinder (10) betätigten Steuerhebels (8) drehbar ist, wobei der Hydraulikzylinder (10) mit einem Ende am Steuerhebel (8) um ein drittes Drehgelenk (14) und mit dem anderen Ende am Balken (5) um ein viertes Drehgelenk (13) drehbar angelenkt ist, dadurch gekennzeichnet, daß der Balken (5) durch einen zweiten Zylinder (9) betätigt wird, der einerseits am Chassis (1) und andererseits am Balken (5) angelenkt ist und es ermöglicht, den Mittelpunkt des durch die Mitten der drei Räder (2, 3, 7) gebildeten Gleichgewichtsdreiecks auf die longitudinale Trägheitsachse zu bringen, auf der sich der Schwerpunkt befindet.

2. Steuervorrichtung nach Anspruch 1, dadurch gekennzeichnet, daß der Balken (5) um das erste Drehgelenk (6) auf einer Verlängerung (16) einer der Längsseiten (15) des Chassis (1) drehbar ist.

3. Steuervorrichtung nach Anspruch 1 oder 2, dadurch gekennzeichnet, daß der Balken (5) beliebig nach links und nach rechts ausrichtbar ist.

4. Vorrichtung nach einem der Ansprüche 1 bis 3, dadurch gekennzeichnet, daß die Ausrichtung des Führungsrades (7) relativ zum Balken (5) und die Ausrichtung des Balkens (5) relativ zum Chassis (1) von einem auf dem Chassis (1) montierten Fahrerhaus aus steuerbar ist.

## Claims

1. Device for steering an agricultural machine mounted on three wheels (2, 3, 7), one of which is an orientable front steering wheel (7) carried on the free end of a drawbar (5) pivoting, at the opposite end, about a first substantially vertical pivot (6) using a fork or a steering knuckle (19) capable of pivoting about a second substantially vertical pivot (18) under the action of a steering lever (8) actuated by a first hydraulic jack (10) articulated at one end to the steering lever (8) about a third pivot (14) and articulated at the other end to the drawbar (5) about a fourth pivot (13), characterised in that the drawbar (5) is actuated by a second jack (9) articulated, on the one hand, to the chassis (1) and, on the other hand, to the drawbar (5), making it possible to bring the point of intersection of the mid-points of the equilibrium triangle determined by the centres of the three wheels (2, 3 and 7) onto the longitudinal axis of inertia of the machine along which the centre of gravity is situated.

2. Device according to Claim 1, characterised in that the drawbar (5) is articulated about the first pivot (6) at an extension (16) of one of the longitudinal sides (15) of the chassis (1).

3. Steering device according to Claim 1 or 2, characterised in that the drawbar (5) can be oriented to the left and to the right as desired.

4. Steering device according to any one of Claims 1 to 3, characterised in that the orientation of the steering wheel (7) with respect to the drawbar (5) and the orientation of the drawbar (5) with respect to the chassis (1) may be controlled from a driving cab mounted on the chassis (1).
